# EUROPEAN PATENT APPLICATION

(11) **EP 1 293 405 A2**
(43) Date of publication of application: **19.03.2003**
(21) Application number: 02255988.4
(22) Date of filing: 29.08.2002
(51) Int. Cl.: B60T 1/06

(54) **Axle assembly**

(30) Priority: 29.08.2001 US 315635 P
(71) Applicant: Meritor Heavy Vehicle Braking Systems (UK) Limited, Reading, Berkshire RG6 1LA (GB)
(72) Inventor: McCann, Denis John, Llangynior, Powys, NP8 1NE (GB); Mills, James, Llangollen, Clwyd (GB); Bellingham, Richard, Wrexham, LL12 0PN (GB); Gibbons, Peter Kerslake, Lliswerry, Newport, NP19 4LU (GB); Morris, Royston Leonard, Rogerstone, Newport NP26 3AY (GB); Roberts, Paul, Newport, NP20 5QU (GB); Thomas, Paul Anthony, Caldicot, Newport, NP26 3AY (GB); Jackson, Jonathan Leslie Christopher, Ross-on-Wye, Herefordshire, HR9 6EA (GB); Heinlein, Carl Edward, Langstone, Newport, NP18 2JR (GB)
(74) Representative: Jones, John Bryn

(57) **Abstract**

An axle and brake mounting assembly (40) includes a brake carrier (44) secured directly to the axle (42). In one example, the brake carrier includes a portion that completely surrounds a corresponding portion of the axle. The brake carrier in one example is welded directly to the axle.

## Description

### BACKGROUND OF THE INVENTION

This invention generally relates to an axle assembly, in particular a vehicle axle assembly. More particularly, this invention relates to an integrated axle adaptor and brake carrier.

Commercial vehicle trailer axles typically include a simple beam axle that is effectively hung from the trailer chassis by leaf springs or an air suspension arrangement. In situations where it is desirable to provide braking at such wheels, there is a requirement for an arrangement that provides a fixed base to which the brake torque associated with the operation of the brake components can be transmitted. Conventional arrangements include an axle adaptor secured to the axle with a separate brake carrier then mounted to the axle adaptor.

Figure 3 schematically shows a conventional arrangement where a support portion 11 is associated with the trailer chassis. A conventional air spring 12 provides a means of suspension in a conventional manner. A suspension component 13 such as a support arm or leaf springs, depending on the particular vehicle, is secured at one end to the support 11 and associated with the air spring 12 as known. An axle 14 is secured in position relative to the suspension component 13 using a conventional spring seat 15 and plate 16. A pair of U-bolts 17 secure the axle, spring seat and plate in place on the suspension component 13. A separate axle adaptor 18 is secured to the axle 14 using a conventional welding technique.

The axle adaptor 18 provides a fixed base to which the brake torque associated with the operation of brake components can be transmitted. It is common to have a separate brake carrier 19 secured to the axle adaptor and then to have braking components supported by the brake carrier. Assembling all of these components requires time and introduces additional space considerations and materials. Each of these presents drawbacks that ideally would be minimized.

This invention addresses the need for more economically and securely supporting brake components relative to an axle while avoiding the shortcomings and drawbacks of the prior art.

### SUMMARY OF THE INVENTION

In general terms, this invention is a vehicle axle and brake support assembly having a brake carrier secured directly to the axle.

In one example assembly designed according to this invention, the brake carrier has a mounting surface that corresponds to the geometry of the axle exterior surface. The brake carrier is welded to the axle in one example.

A method of making an axle assembly designed according to this invention includes providing an axle and then securing a brake carrier directly to an exterior of the axle. In one example, the brake carrier includes an opening through which the axle is at least partially received before the brake carrier is secured to the axle. In such an arrangement, at least a portion of the brake carrier completely surrounds the axle and provides a mounting surface about the entire periphery of the axle.

The various features and advantages of this invention will become apparent to those skilled in the art from the following detailed description of the currently preferred embodiment. The drawings that accompany the detailed description can be briefly described as follows.

### BRIEF DESCRIPTION OF THE DRAWINGS

Figure 1 schematically illustrates a vehicle with which an assembly designed according to this invention can be used.
Figure 2 schematically illustrates an example assembly designed according to this invention.
Figure 3 schematically illustrates a prior art design.

### DETAILED DESCRIPTION OF THE PREFERRED EMBODIMENTS

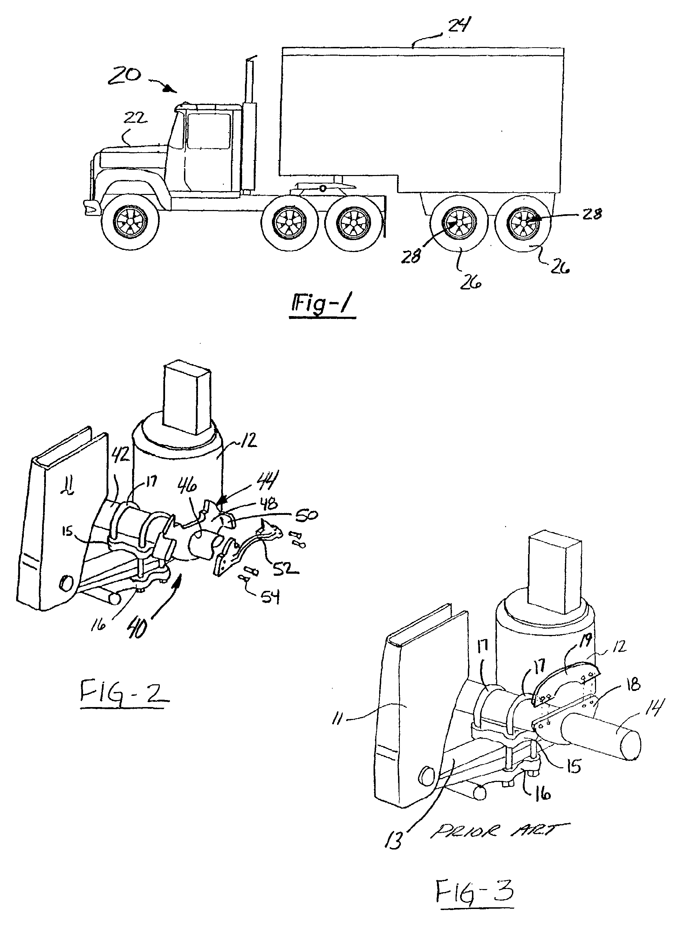

Figure 1 schematically shows a vehicle 20 having a cab portion 22 and a trailer portion 24. Such commercial vehicles are well known. A plurality of wheels 26 are associated with the trailer portion 24 and suspended from the trailer chassis in a generally known manner so that the wheels 26 rotate about the axes 28.

This invention provides a unique axle and brake mounting assembly that integrates the features of several components into one, which reduces parts, material, labor costs and manufacturing steps required to provide a reliable arrangement.

An example assembly 40 designed according to this invention is shown schematically in Figure 2. An axle 42 is supported relative to the vehicle chassis in a conventional manner. A brake carrier 44 is secured directly to the axle 42. In the illustrated example, the brake carrier 44 includes an opening 46 through which a portion of the axle 42 is received prior to the brake carrier 44 being secured to the axle.

In one example, the brake carrier is welded to the axle. Other attachment approaches may be used in an assembly designed according to this invention. Those skilled in the art who have the benefit of this description will realize what will work best to meet the needs of their particular situation.

The example brake carrier 44 includes an inboard abutment 48 and containment surfaces 50 that are integrally formed as a single piece with the portion of the brake carrier 44 that is secured directly to the axle 42. An abutment 52 is secured to the containment surfaces 50 using bolts 54, for example. The abutments 48 and 52 operate to maintain disc brake pads in position relative to a rotor conventionally associated with the axle 42. The illustrated example is particularly well suited for a disc brake arrangement. This invention is not so limited, however, as brake carriers for drum brake assemblies are also within the scope of this invention.

This invention presents a significant departure from the prior art in that the brake carrier is secured directly to the axle. There is no intervening axle adaptor, which reduces the number of parts, the number of steps required during the manufacturing process and the associated labor. Accordingly, the inventive arrangement provides economical advantages, space savings and weight reduction, all of which are desirable.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. An axle assembly (40), comprising:
an axle (42) having an exterior surface; and
a brake carrier (44) secured directly to the exterior surface of the axle and having an abutment adapted to support at least one brake component in a selected position relative to the axle.

2. The assembly of claim 1, wherein the brake carrier comprises a single piece of metal.

3. The assembly of claim 1 or 2, wherein the brake carrier is welded to the axle.

4. The assembly of any preceding claim, wherein the brake carrier has an inboard brake abutment (48) and including an outboard abutment (52) adapted to be secured to the portion of the brake carrier that is secured to the axle.

5. The assembly of claim 4, including a containment surface (50) that extends generally parallel to the axis of the axle and wherein the containment surface extends between the abutments when the outboard abutment is secured in place.

6. The assembly of claim 5, wherein the containment surface and the inboard abutment are integrally formed as part of the brake carrier portion secured to the axle.

7. The assembly of any preceding claim, wherein the brake carrier includes an opening (46) through which at least a portion of the axle is received.

8. The assembly of any preceding claim, wherein a portion of the brake carrier completely surrounds the axle.

9. A method of securing a brake carrier relative to a vehicle axle, comprising the steps of:
providing an axle (42); and
securing the brake carrier directly to an exterior surface of the axle.

10. The method of claim 9 including welding the brake carrier to the axle.

11. The method of claim 9 or 10, including subsequently attaching a second brake carrier component to the portion of the brake carrier that is directly secured to the axle.

12. The method of claim 11, wherein the portion of the brake carrier that is secured directly to the axle has an inboard abutment and the second brake carrier component has an outboard abutment.

13. A vehicle axle assembly, comprising:
an axle (42) having an exterior geometry; and
a brake carrier (44) having a mounting surface that corresponds to the axle exterior geometry and that is secured directly to the axle exterior.

14. The assembly of claim 13, wherein the brake carrier is welded to the axle with a weld joint at the interface between the axle exterior and the brake carrier mounting surface.

15. The assembly of claim 13 or 14, wherein the mounting surface comprises an opening (46) through a portion of the brake carrier.

16. The assembly of any one of claims 13 to 15, wherein at least a portion of the brake carrier completely surrounds the axle.
